# EUROPEAN PATENT APPLICATION

(11) **EP 4 591 963 A1**
(43) Date of publication of application: **30.07.2025**
(21) Application number: 24020033.7
(22) Date of filing: 24.01.2024
(51) Int. Cl.: B01D 19/00, C02F 1/20, C25B 1/04, C25B 15/08

(54) **APPARATUS AND METHOD FOR DEGASSING LIQUID WITH SIEVE PLATE**

(71) Applicant: Linde GmbH, 82049 Pullach (DE)
(72) Inventor: Bauer, Ludwig, 82049 Pullach (DE); Chalakova, Mariyana, 82049 Pullach (DE); Otte, Daniel, 82049 Pullach (DE); Flegiel, Felix, 82049 Pullach (DE); Perschmann, André, 82049 Pullach (DE)
(74) Representative: Lu, Jing

(57) **Abstract**

An apparatus for degassing a liquid, preferably water, from at least one undesired gas which is dissolved in the liquid, wherein the apparatus comprises a column (1) having a stripping gas inlet(2), a stripping gas outlet(3), a liquid inlet (4) and a liquid outlet (5), **characterized in that** multiple sieve plates (6) are provided within the column along the longitudinal axis of the column (1), wherein at least one of the sieve plates comprises multiple perforations (7) and a weir (8) extending upwards, wherein multiple vertical gas passages (9) are formed between the weirs (8) and the column (1) or between the weirs (6) themselves

## Description

The present invention relates to an apparatus for degassing a liquid to remove undesired gases which are dissolved in the liquid and a corresponding method.

### Background

Degassing, also known as degasification, is the removal of dissolved gases from liquids, especially water or aqueous solutions. Gases are removed for various reasons. Chemists remove gases from solvents when the compounds they are working on are possibly air- or oxygen-sensitive, or when bubble formation at solid-liquid interfaces becomes a problem. The formation of gas bubbles when a liquid is frozen can also be undesirable, necessitating degassing beforehand.

Degassing column is often used to remove the gases from the liquid. In the column a stripping gas is routed from the bottom or lower section of the column to the top while a stream of liquid is poured from the top. The rising stripping gas contacts the liquid in the column and the dissolved gas passes into the stripping gas which results in a degassed liquid. The technology relies on an understanding of Henry's law. According to Henry's law, the concentration of each gas in a liquid is proportional to the partial pressure of that gas in contact with the liquid. By introducing a stripping gas that has little or no partial pressure of that gas to be removed with a great area of the gas-liquid interface, it encourages the dissolved gases to diffuse into the stripping gas.

The degassing column can be filled with packing medium to allow the liquid flow to break up ramdomly into a thin film that trickles down through the column. Various packing media could be used as Pall rings, Ballast rings etc. to increase surface/interface area and improve the degassing efficiency.

When steam is used as stripping gas, the phenomenon of steam hammering generally occurs when steam is directly sparged into the degassing column. It happens when the steam vapor interacts with the cold deminerated water with a temperature difference of more than approx. 40°C and condensation occurs at the phase interface which causes a momentarilaly local vacuum which causes a quick subsequent flow of the steam that accelerate the drops of the condensed steam. These drops hit the internals and cause rattling or banging noises with pressure spikes and vibration. These conditions can have adverse effects on process equipment that lead to destruction of the internals in a relatively short time of couple hours to days and thus cause a failure of the degassing process.

It is an object of the present invention to provide advantageous means desirable to degas the liquid within the column which is more efficient and cost-effective.

### Disclosure of the invention

The present invention provides an apparatus of degassing a liquid according to claim 1 and a corresponding method which improves the degassing performance with a simple and economic configuration.

According to the present invention, an apparatus for degassing a liquid, preferably water, from undesired gases which are dissolved in the liquid is provided. The apparatus comprises a column which has a stripping gas inlet, a stripping gas outlet, a liquid inlet and a liquid outlet. Inside the column multiple sieve plates are provided along the longitudianal axis of the column with predetermined distance, wherein at least one sieve plate comprises multiple perforations and a weir extending upwards. By arranging the sieve plates in a certain way, multiple vertical gas passages are formed between the weir and the column or between the weirs themselves.

The column is generally vertical and cylindrical in shape. It comprises a stripping gas inlet and a liquid outlet at the bottom or lower section of the column and it further comprises a stripping gas outlet and liquid inlet at the top or upper section of the column. The liquid could be water, hydrocarbons or any other solvents as like Wash agents e.g. Amine which are to be degassed by a stripping gas. Water will be used only as example hereinafter. The sieve plates are arranged within the column along its longitudinal axis. Depending on the diameter of the column applied different number of sieve plates are installed at the same horizontal level. When the diameter is small, preferably smaller than 2000 mm, more preferalbyl smaller than 1000mm, only one sieve plate is arranged at the same level which is known as 1-path tray design.

Preferably, the sieve plate partially covers the cross section of the column and the uncovered area forms the gas passage to allow the gas to rise up to the next level. Preferably, the sieve plate is arranged to the inner wall of the column partially circumferentially, so that the uncovered circumference of the inner wall forms the gas passage. More preferably, the uncovered circumference is smaller than the circumference of the sieve plate.

In one embodiment, the perforation has a preferred diameter of 3 mm to 10 mm, preferably 4 mm, 5 mm or 6 mm. The sieve plate futher comprises a weir at the edge of the plate which extends upwards for accumulating the water at the perforated plate so that the water goes through the sieve plate essentially only through the perforations but not the gas passages beyond the weir. The gas passage is formed by the weir and the inner wall of the column. In a bigger column which requires more than one sieve plate installed at one horizontal level (e.g. 2-path), the gas passage can also be defined by two sieve plates and the inner wall, more precisely by the two weirs and the inner wall.

This kind of design of a degassing column does not require to fill the column with packing medium anymore, which reduces the steam hammer phenomenon significantly. In this column, less internals are contained, which could be hit only by droplets very close to the internals. This new construction is easy to built and requires only a sieve plate with mechanically punched holes and weirs preferably having a L-angle form. This simplified construction with less material provides advantageously a more cost-effect apparatus for the degassing process.

Preferably, the sieve plates are arranged with an offset to each other within the column whereby the vertical gas passages are also formed with offset one above each other. As a result, the stripping gas rises from one gas passage to the next higher gas passage in a slalom-like way. The sieve plates have a preferred distance from 0.3 m to 1.5 m, more preferably from 0.4 to 0.6 m which should be determined depending on the specific process conditions together with the other factors.

In the operation of degassing, the water flows down through the multiple perforations to form multipe water jets which is altogether similar to a rain-zone. The water flows through the perforations and forms rain zones between every sieve plate and eventually reaches the water outlet at the bottom. Preferably, the sieve plates are arranged with offset from each other within the column so that the stripping gas rises from one gas passage and then across the rain zone horizontally to the next opposite gas passage and subsequently to the next higher level of rain zone and so forth in a slalom-like way. In the area of the rain zone between the sieve plates the stripping gas generates a great gas-liquid interface with the dripping water to be degassed. The numerous waterjets increase the contact area and thus results in an increased efficiency of heat exchange and mass transfer. Usually, with five to seven sieve plates in the degassing column, a purity of 0.02 mg/l O2 corresponding 7 ppb O2 can be achieved and an extra high purity of less than 5 ppb O2 can be achieved with up to nine sieve plates. The degassing from other gases than oxygen requires also similar amount of the sieve plate. The exact number of sieve plates depends on the specific process conditions. The efficiency of degassing depends on various factors as like the type of the stripping gas, the distance between the sieve plates, the diameter of the perforations, residence time of the water etc.

In one embodiment, the weir extends from the edge of the plate only upwards, preferably extends vertically upwards. The weir does not extend downwards from the sieve plate to block the gas passage. The weir has a preferred height of 50 mm to 180 mm and it restrains the water from flowing directly via the gas passage to the next level. By having the weir at the edge, the water is accumulated on the sieve plate and flows only through the perforations.

In another embodiment, in order to ensure that the stripping gas rises only in a slalom-like way, the sieve plate further comprises a seal section where no perforation is formed. The seal section is situated on the sieve plate right above the gas passage of the adjacent sieve plate, so that the stripping gas, as it rises along the gas passage, has no other path to reach a higher level than going across the rain zone to maximize the contact with the water and thus increase the efficiency of degassing process.

In another embodiment, a gas distributor, e.g. perforated tubes, is installed at the bottom of the column to distribute the gas homogeneously across the entire cross-section of the column. In addition or alternatively, a water distributor, e.g., a series of spray nozzles, is installed at the top of the column to distribute the water homogeneously across the entire cross-section of the column.

In another embodiment, when a bigger degassing column with a diameter more than 1.5 m is used, more than one sieve plate is arranged at the same horizontal level within the column. For instance, two sieve plates are symmetrically arranged on both sides of the column and the weirs form the gas passage in the middle. On the next adjacent level, one sieve plate is arranged in the middle with two weirs at each side which forms two opposite gas passages between the weir and the inner wall of the column respectively. In the operation, after the stripping gas rises up from the middle gas passage, it splits into two streams across the rain zones to reach the higher level of gas passages at each side. The basic principle to arrange the sieve plates is to ensure that the stripping gas shall cross the rain zones as much as possible to reach the next higher gas passage or passages.

Preferably, the stripping gas has a F-factor less than 6. The F-factor is a value to describe the gas amount in a thermal separate apparatus as like a column or absorption. It has a unit of Pa^{0,5} or sqrt(Pa) which will be often neglected in the praxis. The stripping gas should not exceed the f-factor of 6 which would lead to the situation that the stripping gas pushes through the perforations despite the accumulated water on the plate instead of flowing through the gas passages. The water can not pass the perforations due to the high pressure of the raising gas and will eventually flood to exceed the height of the weir and flow directly through the gas passage to the next sieve plate below. In this situation, the water and the stripping gas do not contact as sufficiently as the way with the rain zone which results in a lower degassing efficiency.

In another embodiment, the stripping gas is used to degas the water from the undesired dissolved gas and the undesired gas is preferably Argon. The stripping gas is selected from steam, N2, O2, H2 or any combination of them.

In another embodiment, the degassed water is fed into a water electrolyzer for producing high pure hydrogen and oxygen. It is advantageous to degas the water before it is fed into the water electrolyzer, as some dissolved gases as like Argon will influence the purity of the product streams of the water electrolyzer and it is more cost-effective to remove it upstream the electrolyzer.

### Description of the figures

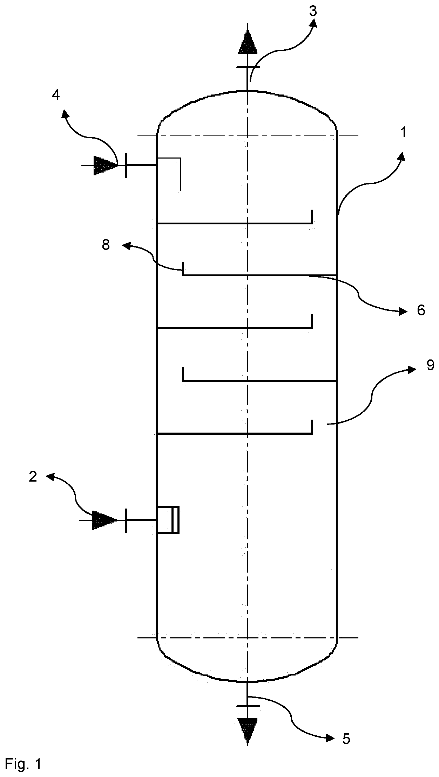

Figure 1 to 6 show different perspektives of different embodiments according to the present invention.

Figure 1 shows the apparatus for degassing water from undesired gases which is dissolved in the water, as like Argon. The apparatus comprises a cylindrical column 1 which has a water inlet 4 at the upper portion, a water outlet 5 at the bottom, a stripping gas inlet 2 at the lower portion and a stripping gas outlet 3 at the top of the column 1. Inside the column 1 there are multiple sieve plates 6 arranged on the inner wall of the column along the longitudinal axis of the column 1. The sieve plates are installed vertically to the inner wall. They are installed with a distance ranging from 0.3 m to 1.5 m, more preferably from 0.4 to 0.6 m to each other. The sieve plate 6 comprises a weir 8 and a flate plate on which multiple perforations 7 are provided (not shown in fig. 1). The weir 8 is connected to the edge of the plate and extends essentially vertically upwards. Preferably, the weir does not extend downwards and does not block the way that the stripping gas flows through the canal between each two sieve plates. The weir has a height of 50 mm to 180 mm. Given the way the sieve plate 6 is installed there is a gas passage 9 provided between the weir 8 and the inner wall of the column 1. The sieve plates are installed offset from one another whereby the gas passages 9 are also offset on top of each other. In addition, a gas distributor and/or a water distributor are installed at the bottom and/or at the top of the column respectively to distribute the gas and water more homogenously. Advantageously, it will increase the contact area and thus improves the efficiency of degassing.

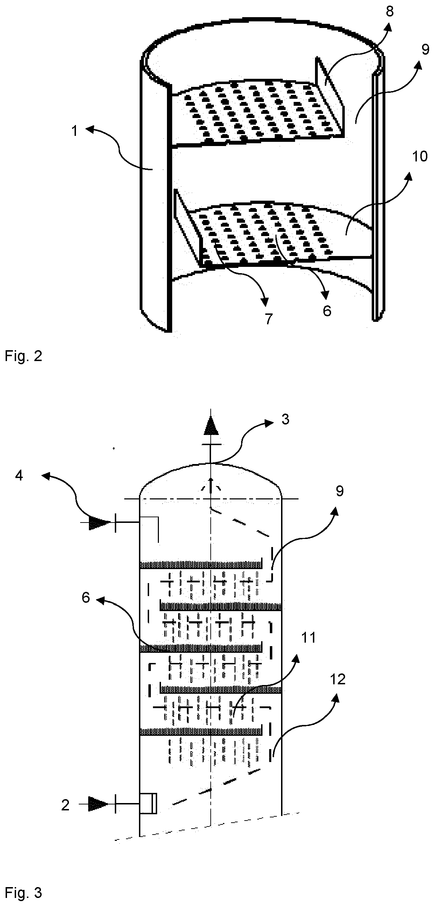

Fig. 2 shows a cross-section perspective of a detailed construction of the sieve plates installed in the column. It shows the weir 8, multiple perforations 7 on the sieve plate 6, the gas passage 9 and a seal section 10. The perforations could be shaped regularly or irregularly and has a diameter of 3 mm to 10 mm, preferably 4 mm to 6 mm, could be also 5mm. The seal section does not have perforations to avoid the stripping gas from flowing directly through this area without passing the canal (rain-zone) between the two sieve plates 6 and thus ensure that the stripping gas has sufficient contact with the water which goes through the perforations 7. As shown in the figure the seal section 10 is arranged on the sieve plate 6 in the area where the vertical gas passages 9 are directed to. By having this seal section without perforations, the gas passage turns to the horizontal cannal between the sieve plates which ensures the stripping gas to have great contact with the water.

Fig. 3 shows the flow pathes of both the water and the stripping gas. In the degassing process, water is introduced through the water inlet 4 and flows through the perforations 7 on the sieve plate downwardly until it reaches the water outlet on the bottom of the column. Due to the weir 8 at the edge of the sieve plate 6 which prevents the water from flowing directly to the gas passage, the water will be collected on the sieve plate and flows only through the perforations 7 which forms a rain-zone 11 between the adjacent sieve plates.

The stripping gas path is indicated by the dotted line 12. The stripping gas is introduced through the gas inlet 2 and flows only through the gas passages 9 and the rain-zone 11 in a slolam-like way until it reaches the gas outlet 3. In the rain-zones 11 the stripping gas has sufficient contact with the water which causes the dissolved gas, e.g. Argon, to be diffused into the stripping gas and thus yield a water stream at the water outlet with much less Argon and a stripping gas at the gas outlet with more Argon.

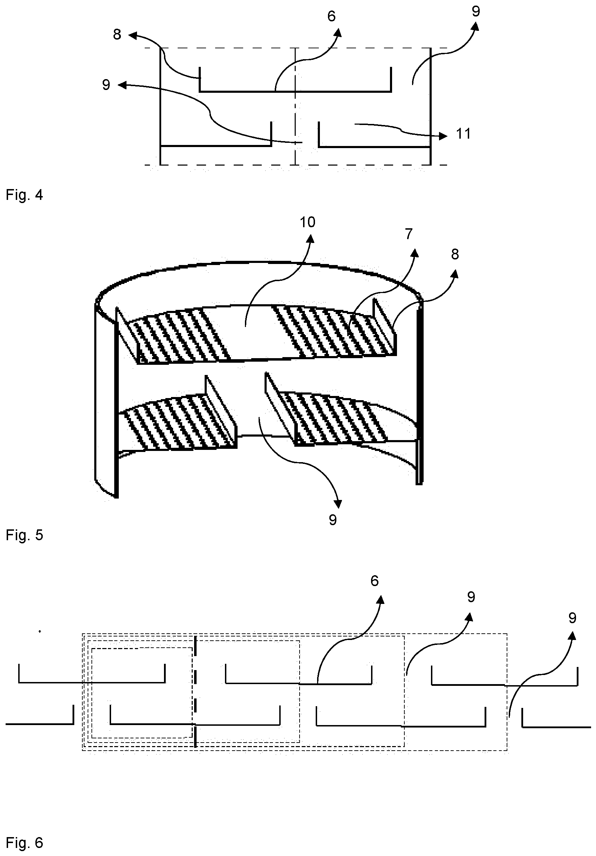

Fig. 4 and 5 show a degassing column (2-path tray) with differently arranged sieve plates which usually can be applied for column with bigger diameter, preferably from1.5 m to 4 m. The sieve plates 6 are arranged at the opposing site of the inner wall of the column which define the gas passages 9 in the middle. On the adjacent level, only one sieve plate is arranged in the middle which forms two gas passages 9 at both sides. By having the sieve plates arranged in this way, the stripping gas will also flow through the gas passages 9 and the rain-zone 11 in a slolam-like way to ensure the maximum contact area with the water flowing only through the perforation 7.

Fig. 6 shows another embodiment of the degassing column which can be applied for even bigger column. With the same principle of design, the sieve plates 6 are arranged offset from each other whereby the gas passages 9 are also arranged offset one above the other which maximize the contact area and contact time of the stripping gas and water and thus increase the degassing efficiency in a simple and economic way.

## Claims

1. An apparatus for degassing a liquid, preferably water, from at least one undesired gas which is dissolved in the liquid, wherein the apparatus comprises a column (1) having a stripping gas inlet (2), a stripping gas outlet (3), a liquid inlet (4) and a liquid outlet (5), **characterized in that** multiple sieve plates (6) are provided within the column along a longitudinal axis of the column (1), wherein at least one of the sieve plates comprises multiple perforations (7) and a weir (8) extending upwards, wherein multiple vertical gas passages (9) are formed between the weirs (8) and the column (1) or between the weirs (6) themselves.

2. An apparatus according to claim 1, wherein the sieve plates (6) are installed offset from each other.

3. An apparatus according to claim 1 or 2, wherein the weir (8) does not extend downwards from the sieve plate (6) to block the gas passages (9).

4. An apparatus according to one of the preceding claims 1 to 3, wherein at least one sieve plate (6) comprises a seal section (10) where no perforation (7) is formed.

5. An apparatus according to one of the preceding claims 1 to 4, wherein the sieve plate (6) is so arranged in the column (1) that the vertical gas passages (9) are formed offset above each other.

6. An apparatus according to one of the preceding claims 1 to 5, wherein the perforation (7) has a diameter of 3mm to 10mm, preferably 4mm, 5mm or 6mm.

7. An apparatus according to one of the preceding claims 1 to 6, wherein the sieve plates (6) have a distance of 0.5 m to 1.5 m to each other.

8. An apparatus according to one of the preceding claims 1 to 7, wherein the weir (8) has a height of 50 mm to 180 mm.

9. An apparatus according to one of the preceding claims 1 to 8, wherein a gas distributor is installed at the bottom of the column and/or a liquid distributor is installed at the top of the column.

10. An apparatus according to one of the preceding claims 1 to 9, wherein more than one sieve plate is provided at the same level.

11. A method for degassing a liquid, preferably water, from at least one undesired gas which is dissolved in the liquid, wherein an apparatus in accordance with one of the claims 1 to 10 is provided, wherein a stripping gas is introduced through the stripping gas inlet (2) into the column (1) and the liquid is introduced through the liquid inlet (4) into the column (1) **characterized in that** the liquid flows downwardly through the perforations (7) and the stripping gas raises upwardly through the vertical gas passages (9).

12. A method according to claim 11, wherein the stripping gas is selected from steam, N2, O2 or H2 or hydrocarbon gases e.g. methane CH₄ and the undesired gas is selected from Argon, CO2, O2, NH₃ or hydrocarbons.

13. A method according to claim 11 or 12, wherein the stripping gas has a F-factor less than 6.

14. A method according to one of the claims 11 to 13, wherein the liquid is water and the water exiting the liquid outlet is introduced into a water electrolyzer.

15. A method according to one of the claims 11 to 14, wherein the liquid enters the liquid inlet into the column and passes the perforations (7) of the sieve plates (6) to form rain zones (11) and eventually reaches the liquid outlet, wherein the stripping gas enters the stripping gas inlet into the column and flows through the rain zones and gas passages alternately to reach the stripping gas outlet.
